# EUROPÄISCHE PATENTSCHRIFT

(11) **EP 2 686 595 B1**
(45) Veröffentlichungstag und Bekanntmachung des Hinweises auf die Patenterteilung: **08.05.2019**
(21) Anmeldenummer: 12700851.4
(22) Anmeldetag: 23.01.2012
(51) Int. Cl.: F16K 99/00

(54) **MIKROFLUIDISCHES VENTIL UND MIKROFLUIDISCHE PLATTFORM**
MICROFLUIDIC VALVE AND MICROFLUIDIC PLATFORM
SOUPAPE MICRO-FLUIDIQUE ET PLATEFORME MICRO-FLUIDIQUE

(30) Priorität: 18.03.2011 DE 102011005811
(43) Veröffentlichungstag der Anmeldung: 22.01.2014
(73) Patentinhaber: Robert Bosch GmbH, 70442 Stuttgart (DE)
(72) Erfinder: DORRER, Christian, 70193 Stuttgart (DE)
(86) Internationale Anmeldenummer: PCT/EP2012/050947
(87) Internationale Veröffentlichungsnummer: WO 2012/126646

(56) Entgegenhaltungen:
- DE-B4-102006 059 459
- US-A- 5 863 502
- US-A1- 2002 124 897

## Beschreibung

Die vorliegende Erfindung betrifft ein Mikroventil zur Kontrolle von Flüssigkeitsströmen in einem mikrofluidischen System, mikrofluidische Systeme, die diese Mikroventile enthalten, Vorrichtungen zur Ansteuerung eines mikrofluidischen Systems, das ein erfindungsgemäßes Mikroventil umfasst, und ein Verfahren zum Austausch eines in einer solchen Vorrichtung enthaltenen mikrofluidischen Systems.

### Stand der Technik

Verschiedene Bauformen von Mikroventilen sind aus der Literatur bekannt. Als Mikroventile werden Ventile bezeichnet, deren Abmessungen in mindestens einer Dimension kleiner als 1 mm sind. Als Mikroventile werden auch Ventile bezeichnet, die mit Mitteln der Mikrostrukturtechnik hergestellt werden.

In "Monolithic membrane valves and diaphragm pumps for practical large-scale integration into glass microfluidic devices" (W. H. Grover et al., Sens. Act. B 2003, 89, 315) wird ein Mikroventil beschrieben, bei dem eine PDMS-Membran durch pneumatischen Druck auf einen Ventilsitz gedrückt wird.

Aus "Normally-closed peristaltic micropump with re-usable actuator and disposable fluidic chip" (F. Trenkle et al., Sens. Act. B 2010, im Druck) ist eine Mikropumpe bekannt, bei der eine elastische Membran mit Piezoaktoren in eine Pumpkammer ausgelenkt wird.

Aus DE 10 2006 059 459 B4 ist eine mikrofluidische Vorrichtung zur Aufnahme oder Manipulation eines Fluids, insbesondere einer Flüssigkeit, mit einem Träger, einer Deckfolie und einer zwischen dem Träger und der Deckfolie gebildeten, insbesondere kanalförmigen Kammer offenbart, wobei die ursprünglich flache und/oder nicht vorgeformte Deckfolie auf den Träger auf laminiert ist und allein durch das auf Laminieren eine dreidimensional geformte oder gewölbte Kammerwand gebildet wird, die die Kammer partiell begrenzt.

### Offenbarung der Erfindung

Gegenstand der Erfindung ist ein Mikroventil zur Kontrolle von Flüssigkeitsströmen in einem mikrofluidischen System, wobei das Mikroventil einen regulierbaren Stößel, eine elastische Folie und eine strukturierte Schicht umfasst, wobei in der Schicht mindestens zwei Kanäle strukturiert sind, die durch einen Steg getrennt sind, und die elastische Folie mit der strukturierten Schicht außerhalb des Stegs fest verbunden ist und die elastische Folie zumindest in einem Bereich des Stegs mit der strukturierten Schicht nicht verbunden ist und eine Frontfläche des regulierbaren Stößels die elastische Folie kontaktiert und den mit der strukturierten Schicht nicht verbundenen Bereich der elastischen Folie innerhalb der Abmessung des Stegs überdeckt, so dass in einem ersten Zustand durch den Stößel die elastische Folie auf der strukturierten Schicht gehalten wird und die elastische Folie zusammen mit dem Steg als Dichtung wirkt und wobei in einem zweiten Zustand der Abstand zwischen der Frontfläche des regulierbaren Stößels und der elastischen Folie vergrößert wird, so dass die Folie durch den Stößel nicht mehr auf dem Steg gehalten wird und eine fluidische Verbindung zwischen den beiden Kanälen hergestellt wird, dadurch gekennzeichnet, dass sich zwischen dem regulierbaren Stößel und der elastischen Folie eine weitere elastische Schicht befindet.

Die besonderen Vorteile der Erfindung sind, dass das erfindungsgemäße Mikroventil günstig in Massen herstellbar ist, insbesondere im Vergleich zu Mikroventilen aus Silizium. Es können viele erfindungsgemäße Mikroventile in einer Schicht realisiert werden. Die erfindungsgemäßen Mikroventile können einfach aktuiert werden (kein aufwändiger Anschluss an Druckluftleitungen). Die erfindungsgemäßen Mikroventile dichten auch bei hohen Drücken sicher ab.

Eine Ausführungsform der Erfindung betrifft ein Mikroventil, dadurch gekennzeichnet, dass sich die weitere elastische Schicht auf der der elastischen Folie zugewandten Seite des regulierbaren Stößels befindet. Eine andere besondere Ausführungsform der Erfindung betrifft ein Mikroventil, dadurch gekennzeichnet, dass sich die weitere elastische Schicht auf der dem regulierbaren Stößel zugewandten Seite der elastischen Folie befindet. Dabei kann die weitere elastische Schicht so groß sein, dass sie die gesamte strukturierte Schicht bzw. die darauf befindlichen elastische Folie bedeckt oder die weitere elastische Schicht kann kleinere Abmessungen haben, so dass nur Teile der gesamten strukturierten Schicht bzw. der darauf befindlichen elastischen Folie bedeckt sind.

Eine weitere besondere Ausführungsform der Erfindung betrifft ein Mikroventil, dadurch gekennzeichnet, dass der Abstand des regulierbaren Stößels zur elastischen Folie dadurch verändert werden kann, dass der regulierbare Stößel entweder magnetisch, piezoelektrisch, mit Formgedächtniseffekt oder mit einem Motor bewegt wird.

Als Formgedächtniseffekt bezeichnet man die Fähigkeit eines Festkörpers, seine Form bei einer Temperaturänderung spontan zu ändern. Die Hochtemperaturform wird durch echte plastische Verformung eingeprägt, während die geänderte Tieftemperaturform durch die pseudoplastische Verformung gegeben wird. Erwärmung durch einen spezifischen Temperaturbereich führt zu Rückstellung der martensitischen Verformung, wobei sich das Memory-Material an seine ursprüngliche Hochtemperaturform erinnert. Die Begriffe Hochtemperatur und Tieftemperatur entsprechen dabei einem Temperaturbereich nahe der Raumtemperatur.

Eine weitere besondere Ausführungsform der Erfindung betrifft ein Mikroventil, dadurch gekennzeichnet, dass das Material für die strukturierte Schicht ein thermoplastisches Polymer, beispielsweise Polycarbonat, Polypropylen, Polystyrol, zyklischen Polyolefinen oder Glas oder Silizium ist.

Eine Ausführungsform der Erfindung betrifft ein Mikroventil, dadurch gekennzeichnet, dass das Material für die elastische Folie und das Material für die elastische Schicht unabhängig voneinander Elastomere, thermoplastische Elastomere, andere thermoplastische Polymere oder PDMS sind.

Ein anderer Aspekt der Erfindung betrifft ein mikrofluidisches System mit mindestens einem erfindungsgemäßen Mikroventil und mindestens einem weiteren mikrofluidischen Element.

Ein weiterer Aspekt der Erfindung betrifft eine Vorrichtung zur Ansteuerung eines mindestens ein Mikroventil aufweisenden, mikrofluidischen Systems umfassend eine Auflagefläche, eine Möglichkeit zur Justierung für das mikrofluidische System und mindestens einen regulierbaren Stößel zum Schließen des Mikroventils, das einen Flüssigkeitsstrom in dem mikrofluidischen System kontrolliert, dadurch gekennzeichnet, dass das Mikroventil eine elastische Folie und eine strukturierte Schicht mit mindestens zwei Kanälen umfasst, die durch einem Steg getrennt sind,
- wobei die elastische Folie mit der strukturierten Schicht im Bereich außerhalb des Stegs fest verbunden ist und wobei die elastische Folie im Bereich des Stegs mit der strukturierten Schicht nicht verbunden ist,
- wobei sich der regulierbare Stößel im Ausgangszustand auf der elastischen Folie befindet und den mit der strukturierten Schicht nicht verbundenen Bereich der elastischen Folie innerhalb der Abmessung des Stegs überdeckt, so dass die elastische Folie auf die strukturierte Schicht gedrückt wird und die elastische Folie zusammen mit dem Steg als Dichtung wirkt und das Mikroventil geschlossen ist, und
- wobei über den regulierbaren Stößel das Mikroventil regulierbar ist, indem der Abstand zwischen dem regulierbaren Stößel und der elastischen Folie vergrößert wird, so dass die Folie durch den Stößel nicht mehr auf den Steg gedrückt wird und eine fluidische Verbindung zwischen den beiden Kanälen hergestellt wird.

Eine besondere Ausführungsform der Erfindung betrifft eine Vorrichtung, gekennzeichnet durch Heizelemente und/oder Kühlelemente zur Temperaturregulierung.

Ein anderer Aspekt der Erfindung betrifft ein Verfahren zum Austausch eines in einer erfindungsgemäßen Vorrichtung enthaltenen mikrofluidischen Systems, dadurch gekennzeichnet, dass der regulierbare Stößel, der mit der Vorrichtung verbunden ist, in eine Position gebracht wird, dass ein Abstand zwischen dem regulierbaren Stößeln und der elastischen Folie vorhanden ist, und dann das auf der Auflagefläche befindliche mikrofluidische System aus der Vorrichtung entfernt wird.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Ansicht der Mikroventils, Schnittansicht quer zur Schichtebene;
- Fig. 2: eine schematische Ansicht des Mikroventils, Schnittansicht längs zur Schichteben;
- Fig. 3: Funktionsweise des Mikroventils, Mikroventil geschlossen (Ausgangszustand);
- Fig. 4: Funktionsweise des Mikroventils, Mikroventil geöffnet, mit fluidischer Verbindung zwischen dem ersten Kanal 4 und dem zweiten Kanal 5;
- Fig. 5: Besondere Ausführungsform des Mikroventils, Mikroventil mit zusätzlicher elastischer Schicht 7 am regulierbaren Stößel 1;
- Fig. 6: Besondere Ausführungsform des Mikroventils, Mikroventil mit zusätzlicher elastischer Schicht 7 auf der elastischen Folie 2;
- Fig. 7: Vorrichtung zur Ansteuerung eines erfindungsgemäßen mikrofluidischen Systems, Ansicht im Querschnitt;
- Fig. 8: Vorrichtung zur Ansteuerung eines erfindungsgemäßen mikrofluidischen Systems, Ansicht in der Draufsicht;
- Fig. 9: Vorrichtung zur Ansteuerung eines erfindungsgemäßen mikrofluidischen Systems mit temperierbarem Bereich 11, Ansicht im Querschnitt;
- Fig. 10: Vorrichtung zur Ansteuerung eines erfindungsgemäßen mikrofluidischen Systems mit temperierbarem Bereich 11, Ansicht in der Draufsicht;
- Fig. 11: Vorlagerung oder Pumpen einer Flüssigkeit im mikrofluidischen System (Schnittansicht quer zur Schichtebene wie in Figur 1;
- Fig. 12: Vorlagerung oder Pumpen einer Flüssigkeit im mikrofluidischen System (Schnittansicht längs zur Schichtebene wie in Figur 2).

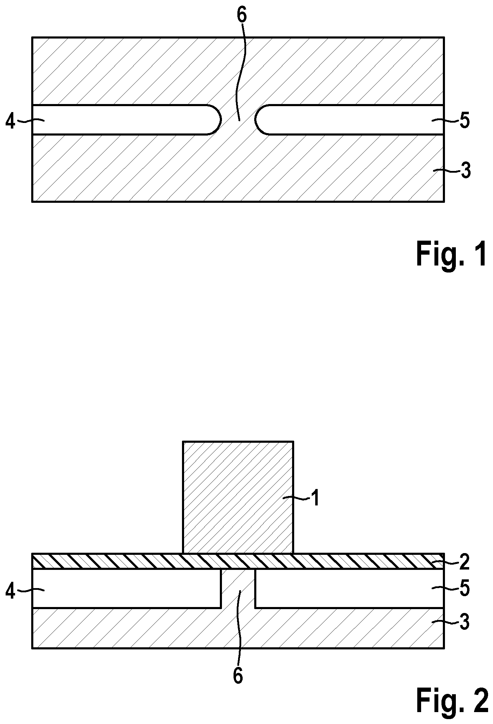

Figur 1 zeigt eine schematische Schnittansicht eines erfindungsgemäßen Mikroventils, wobei eine Schnittansicht quer zur Ebene der strukturierten Schicht 3 gezeigt ist.

Figur 2 zeigt den schematischen Aufbau des Mikroventils in der Seitenansicht. Dargestellt ist eine Schnittansicht längs zur Ebene der strukturierten Schicht 3. Das Mikroventil besteht aus einem Aufbau mit zwei Schichten (Zweischichtaufbau) aus einer strukturierten Schicht 3 und einer elastischen Folie 2. In der Schicht sind zwei Kanäle 4, 5 strukturiert, die durch einen Steg 6 getrennt sind. Die elastische Folie 2 ist mit der strukturierten Schicht 3 fest verbunden, bis auf den Bereich auf dem Steg 6 sowie gegebenenfalls in dessen unmittelbarer Umgebung. Im Bereich des Stegs 6 wirkt ein Stößel 1 auf die elastische Folie 2. Der Stößel 1 überdeckt mindestens den nicht mit der Schicht 3 verbundenen Bereich der elastischen Folie 2. Der Abstand (13) zwischen der Frontfläche des regulierbaren Stößels (1) und der elastischen Folie (2) kann verändert werden.

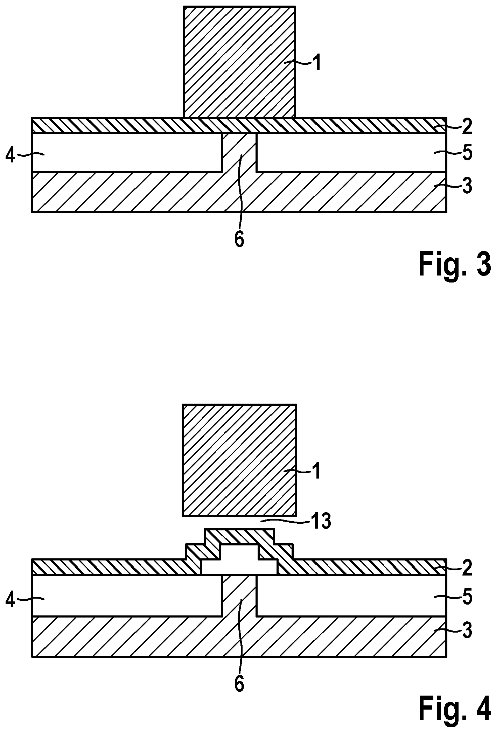

Die Funktionsweise der Erfindung ist in den Figuren 3 und 4 dargestellt. Während der regulierbare Stößel 1 auf die elastische Folie 2 wirkt, ist die Verbindung zwischen den beiden Kanälen 4, 5 verschlossen. Die elastische Folie 2 wirkt dabei als Dichtung. Wenn der regulierbare Stößel 1 die elastische Folie freigibt, kann ein in einem Kanal 4, 5 herrschender fluidischer Druck diese nach oben auslenken und eine fluidische Verbindung zwischen beiden Kanälen 4, 5 wird hergestellt. Das Mikroventil ist geöffnet. Eine Flüssigkeit kann durch das geöffnete Mikroventil strömen.

Das Mikroventil kann die Zustände geschlossen (Ausgangszustand) und geöffnet einnehmen. Im geschlossenen Ausgangszustand fließt keine Flüssigkeit durch das Mikroventil. Im geöffneten Zustand fließt Flüssigkeit durch das Mikroventil. Daneben sind Zwischenzustände des Mikroventils möglich, bei denen der regulierbare Stößel 1 so eingestellt wird, dass die gewünschte Flüssigkeitsmenge durch das Mikroventil fließen kann.

Mögliche Prinzipien der Aktuierung für den Stößel 1 sind magnetisch, piezoelektrisch, mit Motor, pneumatisch, hydraulisch oder mit Formgedächtniseffekt. Ein nach dem Formgedächtniseffekt arbeitender Aktuator wird beispielsweise mit zwei Temperaturniveaus beaufschlagt, wobei dieser Aktuator z.B. als Hebel ausgeführt sein kann, der auf den Stößel wirkt. Der regulierbare Stößel 1 kann jede beliebige Form haben, solange die Form dazu geeignet ist, dass der regulierbare Stößel 1 seine Funktion erfüllen kann. Beispielsweise ist die der elastischen Folie 2 zugewandte Seite rund, rechteckig oder quadratisch. Die Grundfläche des Stößels hat einen Durchmesser zwischen 1 und 10 mm bzw. eine Länge zwischen 1 und 10 mm und eine Breite zwischen 1 und 10 mm, beispielsweise einen Durchmesser von 5 mm bzw. eine Länge von 5 mm und eine Breite von 5 mm. Die Breite der Kanäle 4, 5 beträgt zwischen 0.1 und 2 mm, beispielsweise zwischen 0.2 und 0.5 mm, beispielsweise 0.3 mm, und die Tiefe beträgt zwischen 0.05 und 2 mm, beispielsweise zwischen 0.1 und 0.5 mm, beispielsweise 0.3 mm. Der Steg 6 befindet sich zwischen dem ersten Kanal 4 und dem zweiten Kanal 5. Die Breite des Stegs ist durch die Breite der Kanäle vorgegeben. Die Länge des Stegs beträgt zwischen 0.05 und 2 mm, beispielsweise zwischen 0.2 und 0.5 mm, beispielsweise 0.3 mm. Der Bereich, in dem die elastische Folie 2 nicht fest mit der strukturierten Schicht 3 verbunden ist, ist je nach Form des Stößels beispielsweise rund, rechteckig oder quadratisch ausgeführt und hat einen Durchmesser zwischen 0.1 und 9 mm bzw. eine Länge zwischen 0.1 und 9 mm und eine Breite zwischen 0.1 und 9 mm , beispielsweise einen Durchmesser von 2 mm bzw. eine Länge von 2 mm und eine Breite von 2 mm, und wird vom regulierbaren Stößel 1 an jeder Seite überragt, beispielsweise um 0.1 bis 1 mm, beispielsweise um 0.5 mm. Mit der Länge ist die Dimension in Flussrichtung gemeint (also von links nach rechts in Figur 4).

Der Schichtaufbau kann beispielsweise durch Ultraschallschweißen, Laserdurchstrahlschweißen, Thermokompressionsschweißen, Kleben oder Lamination gefügt werden. Der Mehrschichtaufbau kann aus mehreren unterschiedlichen Schichten bestehen. In einer anderen besonderen Ausführungsform handelt es sich um einen Mehrschichtaufbau, der aus mehreren gleichen Schichten aufgebaut ist. Ein Mehrschichtaufbau umfasst beispielsweise zwei bis zehn oder mehr Schichten, beispielsweise 15, 20, 25 oder 50 Schichten oder mehr. Die Schichten können strukturiert sein, beispielsweise mittels Spritzguss, Heißprägen, Fräsen, Sandstrahlen oder Ätzen. Einzelne Schichten können deformierbar sein. Beispielsweise kann eine Schicht eine Folie sein, besonders bevorzugt eine elastische Folie, beispielsweise ein Elastomer, PDMS, ein thermoplastisches Polymer oder ein thermoplastisches Elastomer, insbesondere ein Polyurethan-basiertes thermoplastisches Elastomer. In bevorzugten Ausführungsformen der Erfindung sind einzelne Schichten 0,025 bis 10 mm dick. Vorzugsweise haben einzelne Schichten eine Dicke von 0,1 mm, 0,5 mm, 1 mm, 1,5 mm, 2 mm, 2,5 mm, 3 mm, 3,5 mm, 4 mm, 4,5 mm, 5 mm. Mögliche Materialien für die strukturierte Schicht sind Polykarbonat, Polystyrol, ein zyklisches Polyolefin, andere thermoplastische Polymere, Glas oder Silizium. Mögliche Materialien für die elastische Schicht sind thermoplastische Elastomere, andere thermoplastische Polymere, PDMS (Polydimethylsiloxan) oder Elastomere.

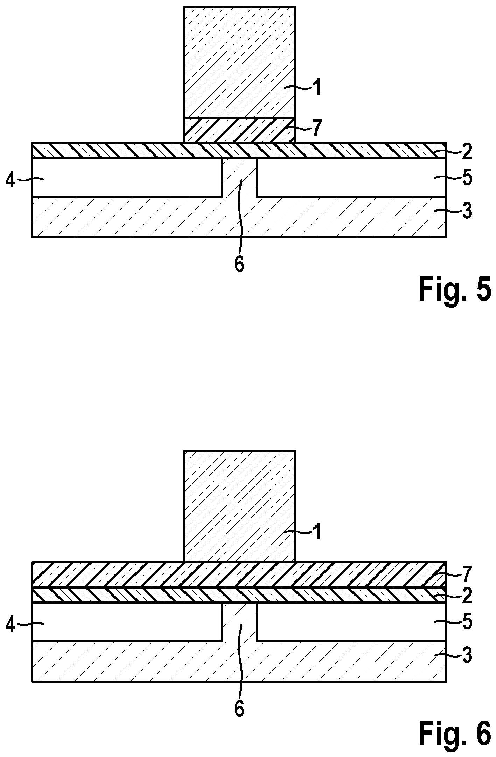

Die Figuren 5 und 6 zeigen eine besondere Ausführungsform der Erfindung. Das erfindungsgemäße Mikroventil kann noch dadurch verbessert werden, dass zwischen die elastische Folie 2 und den Stößel 1 eine weitere elastische Schicht 7 aufgebracht wird. In einer Variante (Figur 5) befindet sich auf dem Stößel eine zusätzliche elastische Schicht 7. Diese Schicht sorgt für ein homogeneres Einwirken der Kraft auf die elastische Folie. Dadurch wird die Dichtigkeit des Ventils verbessert und eine Beschädigung der elastischen Folie vermieden. Die zusätzliche elastische Schicht 7 kann auch flächig ausgeführt sein und die gesamte mikrofluidische Schicht überdecken (Figur 6).

Gegenstand der Erfindung sind auch mikrofluidische Systeme, die ein oder mehrere erfindungsgemäße Mikroventile enthalten können. Die erfindungsgemäße Ventiltechnologie bietet sich zur Realisierung eines integrierten mikrofluidischen Systems an. In diesem Fall befinden sich auf der strukturierten Schicht ein oder mehrere Mikroventile sowie ein oder mehrere zusätzliche mikrofluidische Elemente. Zusätzliche mikrofluidische Elemente können beispielsweise Mischer, Kammern, Filter etc. sein. Insbesondere kann das Mikroventil zusammen mit einem Filter zum blasenfreien Befüllen einer mikrofluidischen Filterkammer eingesetzt werden.

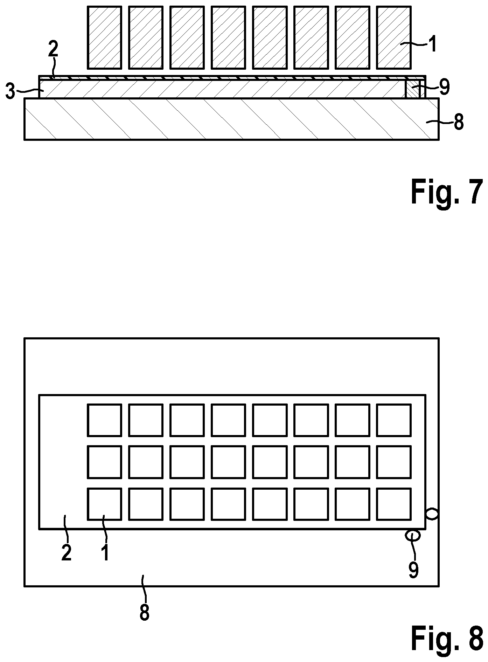

Die Ansteuerung des mikrofluidischen Systems kann beispielsweise mit der in den Figuren 7 und 8 dargestellten Vorrichtung (oder einer dazu ähnlichen) geschehen. Diese Vorrichtung stellt eine Auflagefläche 8 mit einer Möglichkeit zur Justierung 9 für das mikrofluidische System zur Verfügung. Über dem mikrofluidischen System befinden sich ein oder mehrere Stößel 1, die auf die Mikroventile des mikrofluidischen Systems einwirken können und die entweder alle zusammen oder aber getrennt voneinander angesteuert werden können. In einer Ausführungsform der Erfindung sind die regulierbaren Stößel 1 Bestandteil des mikrofluidischen Systems.

In einer anderen besonderen Ausführungsform der Erfindung sind die regulierbaren Stößel 1 Bestandteil der Vorrichtung zur Ansteuerung des mikrofluidischen Systems. Die regulierbaren Stößel 1 wirken dann mit den Mikroventilen in dem mikrofluidischen System zusammen. In dieser Ausführungsform umfasst die Vorrichtung vorzugsweise mehrere regulierbare Stößel 1 zur Ansteuerung mehrerer Mikroventile, wobei die regulierbaren Stößel 1 beispielsweise alle zusammen oder unabhängig voneinander reguliert werden können. Beispielsweise sind die regulierbaren Stößel 1 in der Vorrichtung in Figur 8 als Array ausgeführt und in einem bestimmten Raster angeordnet. Dadurch können beliebige mikrofluidische Systeme, deren Mikroventile in diesem Raster angeordnet sind, mit der Vorrichtung angesteuert werden.

In einer weiteren besonderen Ausführungsform der Erfindung ist die Vorrichtung zur Ansteuerung des mikrofluidischen Systems so gestaltet, dass das mikrofluidische System einfach ausgetauscht werden kann, z.B. durch seitliches Einschieben in die Vorrichtung. Die regulierbaren Stößel 1 können zum Austauschen des mikrofluidischen Systems nach oben gefahren werden. Es ist möglich, in diesem Fall einen oder mehrere regulierbare Stößel 1 vorzusehen, die auf inaktive Bereiche des mikrofluidischen Systems wirken und lediglich zur mechanischen Arretierung dienen.

In einer weiteren Ausführungsform der Erfindung umfasst die Vorrichtung temperierbare Bereiche. Beispielsweise können ein oder mehrere regulierbare Stößel 1 sowie gegebenenfalls Teilbereiche der Auflagefläche mit Heiz- und/oder Kühlelementen (z.B. Peltier, Leiterbahn) ausgestattet sein. Dadurch können bestimmte Bereiche des mikrofluidischen Systems auf definierte Temperaturniveaus gebracht werden. Dies kann z.B. für die Durchführung einer Polymerase-Kettenreaktion (PCR) vorteilhaft sein.

In einer weiteren besonderen Ausführungsform der Erfindung umfasst die Vorrichtung temperierbare Bereiche, wobei der vordere Bereich eines temperierten regulierbaren Stößels 1 vom hinteren Bereich eines temperierten regulierbaren Stößels 1, insbesondere vom Aktor, thermisch isoliert ist. Dies kann beispielsweise durch Einbringen eines thermisch schlecht leitfähigen Materials erfolgen. Dies hat den Vorteil, dass die thermische Masse reduziert und ein schnelleres Aufheizen bzw. Abkühlen ermöglicht wird.
In einer weiteren besonderen Ausführungsform der Erfindung kann neben dem mikrofluidischen System ein Ventilator angebracht sein, um eine schnellere Abkühlung der beheizten Bereiche zu erreichen.

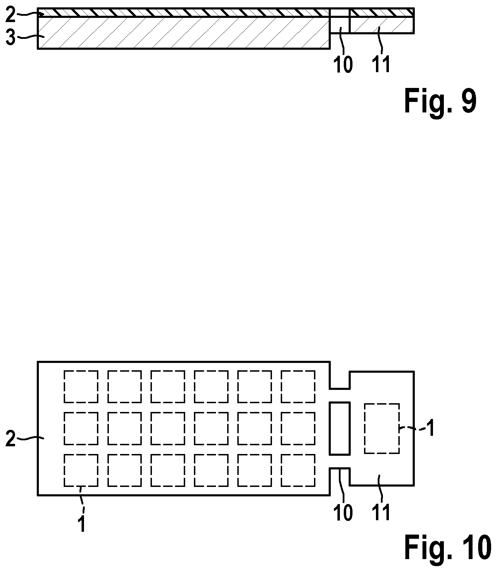

In einer Ausführungsform der Erfindung können das mikrofluidische System und die Auflagefläche im temperierbaren Bereich 11 dünner sein als im übrigen Bereich der strukturierten Schicht 3. In einer weiteren besonderen Ausführungsform der Erfindung können das mikrofluidische System und die Auflagefläche im temperierbaren Bereich 11 mit Nuten 10, freigestellt sein (Figur 9). In einer weiteren besonderen Ausführungsform der Erfindung kann das mikrofluidische System oder die Auflagefläche im temperierbaren Bereich 11 dünner sein als im übrigen Bereich der strukturierten Schicht 3. In einer weiteren besonderen Ausführungsform der Erfindung kann das mikrofluidische System oder die Auflagefläche im temperierbaren Bereich 11 freigestellt sein, beispielsweise mit Nuten 10 (Figur 10). Dies bietet den Vorteil, dass die thermische Masse reduziert und ein schnelleres Aufheizen bzw. Abkühlen ermöglicht wird. Die gestrichelten Linien deuten die Position der regulierbaren Stößel 1 an.

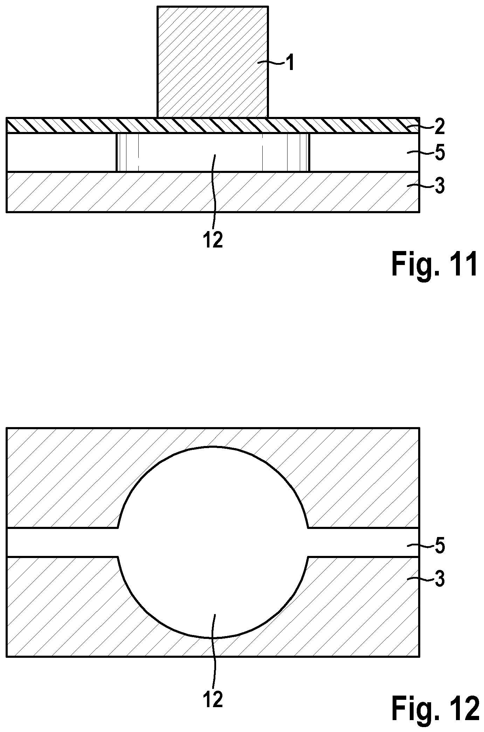

In einer weiteren besonderen Ausführungsform der Erfindung umfasst die strukturierte Schicht 3 eine Kammer 12, gegenüber der ein regulierbarer Stößel 1 liegt (Figur 11, Figur 12). Durch Aktuierung des regulierbaren Stößels 1 kann die elastische Folie 2 in die Kammer 12 hinein ausgelenkt werden und Flüssigkeit aus der Kammer 12 verdrängt werden. Ein solches mikrofluidisches System kann z.B. zur Vorlagerung und kontrollierten Abgabe von Flüssigkeiten ausgenutzt werden.

In mikrofluidischen Systemen kann eine Pumpe dadurch realisiert werden, dass mehrere, beispielsweise zwei, drei, vier, fünf, sechs, sieben, acht, neun, zehn, fünfzehn, zwanzig oder mehr (aktuierbare) Kammern 12 hintereinander geschaltet werden. In mikrofluidischen Systemen kann eine Pumpe auch dadurch realisiert werden, dass eine Reihenschaltung aus mehreren, beispielsweise zwei, drei, vier, fünf, sechs, sieben, acht, neun, zehn, fünfzehn, zwanzig oder mehr Bausteinen bestehen, wobei die Bausteine ein Mikroventil, eine Kammer 12 und noch ein Mikroventil hintereinander umfassen. Mit einer solchen mikrofluidischen Pumpe können Flüssigkeiten im mikrofluidischen System gepumpt werden.

Das mikrofluidische Ventil ist in allen fluidischen Systemen einsetzbar, in denen ein Ventil oder eine Pumpe benötigt wird, beispielsweise in polymeren Lab-on-Chip (LOC)- und Micro-Total-Analysis-Systemen (µTA-Systemen) zur molekularen Diagnostik.

Das erfindungsgemäße Mikroventil und mikrofluidische Systeme, die dieses Mikroventil umfassen, sind für Herstellungstechnologien geeignet, die auf die Massenfertigung solcher Systeme abzielen. Silizium-Mikroventile benötigen beispielsweise komplexe Fertigungsprozesse. Aus Kostengründen werden sie deshalb oft nicht mit mikrofluidischen Elementen, die größere Flächen benötigen, integriert. Kern der vorliegenden Erfindung ist ein Zweischichtaufbau aus einerstrukturierten Schicht und einer elastischen Folie. Ein oder mehrere Stößel wirken auf die elastische Folie. Ein Vorteil des vorliegenden Mikroventils und von mikrofluidischen Systemen, die dieses Mikroventil umfassen, ist, dass der (Zwei-) Schichtaufbau kostengünstig ist und in Massen hergestellt werden kann. Auch können auf einer strukturierten Schicht 3 bzw. in einem mikrofluidischen System eine Vielzahl von Mikroventilen realisiert werden. Die Mikroventile dichten auch bei hohen fluidischen Drücken sicher ab. Die erfindungsgemäßen Mikroventile enthalten keine aufwändigen Anschlüsse. Bei den bekannten pneumatischen Mikroventilen beispielsweise ist der Anschluss an die Pilotventile sehr aufwändig (es wird eine Vielzahl von Druckluftleitungen benötigt). Bei den erfindungsgemäßen Mikroventilen ist die Anbindung an den Aktor/die Aktoren sehr einfach. Neben den Mikroventilen können auf derselben strukturierten Schicht 3 oder in demselben mikrofluidischen System auch weitere fluidische Elemente realisiert werden. Ein mikrofluidisches System, das ein erfindungsgemäßes Mikroventil umfasst, kann beispielsweise in eine Vorrichtung zum Ansteuern des mikrofluidischen Systems eingelegt werden, in dem sich die Aktoren und Stößel befinden. Damit ist ein solches mikrofluidisches System für Routineanalysen einsetzbar.

## Patentansprüche

1. Mikroventil zur Kontrolle von Flüssigkeitsströmen in einem mikrofluidischen System, wobei das Mikroventil einen regulierbaren Stößel (1), eine elastische Folie (2) und eine strukturierte Schicht (3) umfasst, wobei in der Schicht (3) mindestens zwei Kanäle (4, 5) strukturiert sind, die durch einen Steg (6) getrennt sind, und die elastische Folie (2) mit der strukturierten Schicht (3) außerhalb des Stegs (6) fest verbunden ist und die elastische Folie (2) zumindest in einem Bereich des Stegs (6) mit der strukturierten Schicht (3) nicht verbunden ist und eine Frontfläche des regulierbaren Stößels (1) die elastische Folie (2) kontaktiert und den mit der strukturierten Schicht (3) nicht verbundenen Bereich der elastischen Folie (2) innerhalb der Abmessung des Stegs (6) überdeckt, so dass in einem ersten Zustand durch den Stößel die elastische Folie (2) auf der strukturierten Schicht gehalten wird und die elastische Folie (2) zusammen mit dem Steg (6) als Dichtung wirkt und wobei in einem zweiten Zustand der Abstand (13) zwischen der Frontfläche des regulierbaren Stößels (1) und der elastischen Folie (2) vergrößert wird, so dass die Folie (2) durch den Stößel (1) nicht mehr auf dem Steg (6) gehalten wird und eine fluidische Verbindung zwischen den beiden Kanälen (4, 5) hergestellt wird, **dadurch gekennzeichnet, dass** sich zwischen dem regulierbaren Stößel (1) und der elastischen Folie (2) eine weitere elastische Schicht (7) befindet.

2. Mikroventil nach Anspruch 1, **dadurch gekennzeichnet, dass** sich die weitere elastische Schicht (7) auf der der elastischen Folie (2) zugewandten Seite des regulierbaren Stößels (3) befindet.

3. Mikroventil nach Anspruch 1 oder 2, **dadurch gekennzeichnet, dass** der Abstand des regulierbaren Stößels (1) zur elastischen Folie (2) dadurch reguliert wird, dass der regulierbare Stößel (1) entweder magnetisch, piezoelektrisch, mit Formgedächtniseffet oder mit einem Motor bewegt wird.

4. Mikroventil nach einem der Ansprüche 1 bis 3, **dadurch gekennzeichnet, dass** das Material für die strukturierte Schicht (3) aus thermoplastischen Polymeren ist, beispielsweise Polycarbonat, Polypropylen, Polystyrol, zyklischen Polyolefinen, oder Glas oder Silizium.

5. Mikroventil nach einem der Ansprüche 1 bis 4, **dadurch gekennzeichnet, dass** das Material für die elastische Folie (2) und das Material für die weitere elastische Schicht (7) unabhängig voneinander Elastomere, thermoplastische Elastomere, andere thermoplastische Polymere oder PDMS sind.

6. Mikrofluidisches System mit mindestens einem Mikroventil nach einem der Ansprüche 1 bis 5 und mindestens einem weiteren mikrofluidischen Element.

7. Mikrofluidisches System mit mindestens einem Mikroventil und einem regulierbaren Stößel und einer Vorrichtung zur Ansteuerung des mindestens ein Mikroventil aufweisenden, mikrofluidischen Systems, umfassend eine Auflagefläche (8), eine Möglichkeit zur Justierung (9) für das mikrofluidische System und mindestens einen regulierbaren Stößel (1) zum Schließen des Mikroventils, das einen Flüssigkeitsstrom in dem mikrofluidischen System kontrolliert, wobei das Mikroventil eine elastische Folie (2) und eine strukturierte Schicht (3) mit mindestens zwei Kanälen (4, 5) umfasst, die durch einem Steg (6) getrennt sind,
- wobei die elastische Folie (2) mit der strukturierten Schicht (3) im Bereich außerhalb des Stegs (6) fest verbunden ist und wobei die elastische Folie (2) im Bereich des Stegs (6) mit der strukturierten Schicht (3) nicht verbunden ist,
- wobei sich der regulierbare Stößel (1) im Ausgangszustand auf der elastischen Folie (2) befindet und den mit der strukturierten Schicht (3) nicht verbundenen Bereich der elastischen Folie (2) innerhalb der Abmessung des Stegs (6) überdeckt, so dass die elastische Folie (2) auf die strukturierte Schicht (3) gedrückt wird und die elastische Folie (2) zusammen mit dem Steg (6) als Dichtung wirkt und das Mikroventil geschlossen ist, und
- wobei über den regulierbaren Stößel (1) das Mikroventil regulierbar ist, indem der Abstand zwischen dem regulierbaren Stößel (1) und der elastischen Folie (2) vergrößert wird, so dass die Folie (2) durch den regulierbaren Stößel (1) nicht mehr auf den Steg (6) gedrückt wird und eine fluidische Verbindung zwischen den beiden Kanälen (4, 5) hergestellt wird, **dadurch gekennzeichnet, dass** auf dem Stößel (1) eine weitere elastische Schicht (7) aufgebracht ist.

8. Vorrichtung nach Anspruch 7, **gekennzeichnet durch** Heizelemente und/oder Kühlelemente zur Temperaturregulierung.

## Claims

1. Micro-valve for controlling liquid streams in a microfluidic system, wherein the micro-valve comprises a regulable plunger (1), an elastic film (2) and a structured layer (3), wherein at least two channels (4, 5) are structured in the layer (3), said channels being separated by a web (6), and the elastic film (2) is fixedly connected to the structured layer (3) outside the web (6), and the elastic film (2) is not connected to the structured layer (3) at least in a region of the web (6), and a front surface of the regulable plunger (1) makes contact with the elastic film (2) and, within the dimensioning of the web (6), covers that region of the elastic film (2) which is not connected to the structured layer (3), such that, in a first state, the elastic film (2) is held on the structured layer by the plunger and the elastic film (2) acts, together with the web (6), as a seal, and wherein, in a second state, the spacing (13) between the front surface of the regulable plunger (1) and the elastic film (2) is enlarged such that the film (2) is no longer held on the web (6) by the plunger (1) and a fluidic connection between the two channels (4, 5) is established, **characterized in that** a further elastic layer (7) is situated between the regulable plunger (1) and the elastic film (2).

2. Micro-valve according to Claim 1, **characterized in that** the further elastic layer (7) is situated on that side of the regulable plunger (3) which faces the elastic film (2).

3. Micro-valve according to Claim 1 or 2, **characterized in that** the spacing of the regulable plunger (1) to the elastic film (2) is regulated **in that** the regulable plunger (1) is moved magnetically, piezoelectrically, by way of a shape-memory effect or by way of a motor.

4. Micro-valve according to one of Claims 1 to 3, **characterized in that** the material for the structured layer (3) is composed of thermoplastic polymers, for example polycarbonate, polypropylene, polystyrene or cyclic polyolefins, or of glass or silicon.

5. Micro-valve according to one of Claims 1 to 4, **characterized in that** the material for the elastic film (2) and the material for the further elastic layer (7) are, independently of one another, elastomers, thermoplastic elastomers, other thermoplastic polymers or PDMS.

6. Microfluidic system having at least one micro-valve according to one of Claims 1 to 5 and having at least one further microfluidic element.

7. Microfluidic system having at least one micro-valve and a regulable plunger and a device for actuating the microfluidic system having at least one micro-valve, comprising a support surface (8), an adjustment means (9) for the microfluidic system and at least one regulable plunger (1) for closing the micro-valve, the latter controlling a liquid stream in the microfluidic system, wherein the micro-valve comprises an elastic film (2) and a structured layer (3) with at least two channels (4, 5), said channels being separated by a web (6),
- wherein the elastic film (2) is fixedly connected to the structured layer (3) in the region outside the web (6), and wherein the elastic film (2) is not connected to the structured layer (3) in the region of the web (6),
- wherein, in the initial state, the regulable plunger (1) is situated on the elastic film (2) and, within the dimensioning of the web (6), covers that region of the elastic film (2) which is not connected to the structured layer (3), such that the elastic film (2) is pressed onto the structured layer (3) and the elastic film (2) acts, together with the web (6), as a seal and the micro-valve is closed, and
- wherein the micro-valve is able to regulated via the regulable plunger (1) in that the spacing between the regulable plunger (1) and the elastic film (2) is enlarged such that the film (2) is no longer pressed onto the web (6) by the regulable plunger (1) and a fluidic connection between the two channels (4, 5) is established, **characterized in that** a further elastic layer (7) is applied to the plunger (1).

8. Device according to Claim 7, **characterized by** heating elements and/or cooling elements for temperature regulation.

## Revendications

1. Microsoupape servant à commander des flux de liquide dans un système microfluidique, la microsoupape comportant un poussoir réglable (1), une feuille élastique (2) et une couche structurée (3), au moins deux canaux (4, 5) étant structurés dans la couche (3), lesquels canaux sont séparés par une nervure (6), et la feuille élastique (2) étant reliée solidement à la couche structurée (3) à l'extérieur de la nervure (6) et la feuille élastique (2) n'étant pas reliée à la couche structurée (3) au moins dans une zone de la nervure (6) et une face avant du poussoir réglable (1) entrant en contact avec la feuille élastique (2) et recouvrant la zone de la feuille élastique (2) non reliée à la couche structurée (3) dans les limites de la dimension de la nervure (6), de telle sorte que, dans un premier état, la feuille élastique (2) soit retenue sur la couche structurée par le poussoir et que la feuille élastique (2) agisse, conjointement avec la nervure (6), en tant que joint d'étanchéité et, dans un deuxième état, la distance (13) entre la face avant du poussoir réglable (1) et la feuille élastique (2) étant agrandie, de telle sorte que la feuille (2) ne soit plus retenue sur la nervure (6) par le poussoir (1) et qu'une liaison fluidique soit réalisée entre les deux canaux (4, 5), **caractérisée en ce qu'**une autre couche élastique (7) se trouve entre le poussoir réglable (1) et la feuille élastique (2).

2. Microsoupape selon la revendication 1, **caractérisée en ce que** l'autre couche élastique (7) se trouve sur le côté du poussoir réglable (3) tourné vers la feuille élastique (2).

3. Microsoupape selon la revendication 1 ou 2, **caractérisée en ce que** la distance du poussoir réglable (1) par rapport à la feuille élastique (2) est réglée par le fait que le poussoir réglable (1) est déplacé de manière magnétique, piézoélectrique, par effet de mémoire de forme ou à l'aide d'un moteur.

4. Microsoupape selon l'une des revendications 1 à 3, **caractérisée en ce que** la matière pour la couche structurée (3) est constituée de polymères thermoplastiques, par exemple de polycarbonate, de polypropylène, de polystyrène, de polyoléfines cycliques, de verre ou de silicium.

5. Microsoupape selon l'une des revendications 1 à 4, **caractérisée en ce que** la matière pour la couche élastique (2) et la matière pour l'autre couche élastique (7) sont, indépendamment l'une de l'autre, des élastomères, des élastomères thermoplastiques, d'autres polymères thermoplastiques ou du PDMS.

6. Système microfluidique comprenant au moins une microsoupape selon l'une des revendications 1 à 5 et au moins un autre élément microfluidique.

7. Système microfluidique comprenant au moins une microsoupape et un poussoir réglable et un dispositif de commande du système microfluidique comprenant au moins une microsoupape, le dispositif comportant une surface d'appui (8), une possibilité d'ajustage (9) pour le système microfluidique et au moins un poussoir réglable (1) servant à fermer la microsoupape qui commande un flux de liquide dans le système microfluidique, la microsoupape comportant une feuille élastique (2) et une couche structurée (3) dotée d'au moins deux canaux (4, 5) qui sont séparés par une nervure (6),
- la couche élastique (2) étant reliée solidement à la couche structurée (3) dans la zone à l'extérieur de la nervure (6) et la couche élastique (2) n'étant pas reliée à la couche structurée (3) dans la zone de la nervure (6),
- le poussoir réglable (1) se trouvant sur la feuille élastique (2) à l'état initial et recouvrant la zone de la feuille élastique (2) non reliée à la couche structurée (3) dans les limites de la dimension de la nervure (6), de telle sorte que la feuille élastique (2) soit pressée sur la couche structurée (3) et que la feuille élastique (2) agisse, conjointement avec la nervure (6), en tant que joint d'étanchéité et que la microsoupape soit fermée, et
- la microsoupape pouvant être réglée par le biais du poussoir réglable (1), par le fait que la distance entre le poussoir réglable (1) et la feuille élastique (2) est agrandie, de telle sorte que la feuille (2) ne soit plus pressée sur la nervure (6) par le poussoir réglable (1) et qu'une liaison fluidique soit réalisée entre les deux canaux (4, 5), **caractérisé en ce qu'**une autre couche élastique (7) est appliquée sur le poussoir (1).

8. Dispositif selon la revendication 7, **caractérisé par** des éléments de chauffage et/ou des éléments de refroidissement pour la régulation de la température.
